# EUROPÄISCHE PATENTSCHRIFT

(11) **EP 2 559 600 B1**
(45) Veröffentlichungstag und Bekanntmachung des Hinweises auf die Patenterteilung: **01.06.2016**
(21) Anmeldenummer: 12005156.0
(22) Anmeldetag: 13.07.2012
(51) Int. Cl.: B60T 7/10, B60T 7/12

(54) **Verfahren zum Verzögern eines Fahrzeugs**
Procédé de ralentissement dýun véhicule
Method for slowing a vehicle

(30) Priorität: 18.08.2011 DE 102011110913
(43) Veröffentlichungstag der Anmeldung: 20.02.2013
(73) Patentinhaber: AUDI AG, 85045 Ingolstadt (DE)
(72) Erfinder: Geltl, Daniel, 93326 Abensberg (DE)

(56) Entgegenhaltungen:
- DE-A1- 19 838 885
- DE-A1-102006 041 218

## Beschreibung

Die Erfindung betrifft ein Verfahren zum Verzögern eines Fahrzeugs nach dem Oberbegriff des Anspruchs 1 sowie eine Bremsanlage zur Durchführung eines solchen Verfahrens gemäß dem Oberbegriff des Anspruchs 10 bzw. des Anspruchs 11.

Seit langem sind mechanische Feststellbremsen bzw. Handbremsen mit Bowdenzug bekannt. Im Allgemeinen sollen Feststellbremsen ein haltendes oder abgestelltes Fahrzeug gegen Wegrollen sichern. Darüber hinaus werden Feststellbremsen auch bei Notbremsungen zur Verzögerung während der Fahrt eingesetzt.

Eine elektromechanische Feststellbremse, auch als Electric Park Brake (EPB) bezeichnet, ersetzt zunehmend die herkömmliche mechanische Handbremse bzw. Fußfeststellbremse und wird mittels eines Tasters in der Armaturentafel oder der Mittelkonsole betätigt. Sie funktioniert unabhängig von der Betriebsbremse, sodass in einer Notsituation eine Notbremsung über die Betätigung eines Tasters bis zum Stillstand ausgeführt werden kann.

Aus der DE 195 16 639 A1 ist eine Bremsanlage bekannt, bei der für eine Notbremsung ein hydraulischer Sekundärbremskreis eingesetzt wird. Die Notbremsung kann hierbei über dieselbe Einrichtung eingeleitet werden, die auch eine fremdkraftbetätigte Feststellbremse ansteuert. Unterhalb einer festgelegten Geschwindigkeit von wenigen Stundenkilometern wird die Feststellbremse beispielsweise durch einmaliges Antippen eines elektrischen Tasters betätigt.

Eine Lösung für den Einsatz einer Notbremsung oberhalb einer festgelegten Geschwindigkeit hingegen kann der Offenbarung der EP 0 478 642 B1 entnommen werden, bei der eine Dauerbetätigung des elektrischen Tasters erforderlich ist, um die beschriebene Notbremsung über eine Feststellbremsanlage einzuleiten.

Des Weiteren ist der DE 102004012684 A1 ein Verfahren zum Betätigen einer elektrisch ansteuerbaren Feststellbremse bekannt, welche in kritischen Fahrsituationen bei endlichen Geschwindigkeiten, von Null verschieden, eine Fahrgeschwindigkeitsreduzierung des Fahrzeugs erlaubt, ohne dass das Fahrzeug in eine instabile Situation gerät. Der Zweck des Verfahrens ist, ein Blockieren der Räder auf Grund eines zu hohen Bremsmomentes während einer dynamischen Bremsung bei einer Kurvenfahrt zu verhindern. Dazu wird ein flacher Gradient des Kraftaufbaus während der Aktivierung der Feststellbremse geschaltet. Allerdings berücksichtigt das Verfahren keine weiteren kritischen Fahrsituationen.

Die DE 198 38 885 A1 beschreibt ein Verfahren zur Sicherstellung des Stillstands eines Fahrzeugs, insbesondere in Verbindung mit einer Steuerung der Geschwindigkeit des Fahrzeugs, bei dem bei erkanntem Stillstand des Fahrzeugs eine Bremskraft zur Realisierung einer Feststellbremse aufgebaut wird, wobei die Bremskraft auch dann aufrecht erhalten wird, wenn die Versorgungsspannung für die elektrischen Systeme des Fahrzeugs abgeschaltet ist.

Die DE 10 2006 041 218 A1 offenbart ein Verfahren zum Betrieb eines Kraftfahrzeugs mit einer durch ein Bedienelement betätigbaren Feststellbremsanlage. Dabei bewirkt eine Betätigung des Bedienelements während der Fahrt des Kraftfahrzeugs die Durchführung eines Notbremsvorgangs und eine Betätigung des Bedienelements im Stillstand des Kraftfahrzeugs die Einleitung eines Feststellbremsvorgangs.

Es ist Aufgabe der Erfindung, ein Verfahren zum Verzögern eines Fahrzeugs sowie eine damit betriebene Bremsanlage für ein Fahrzeug vorzusehen, welche die Funktionen der herkömmlichen Feststellbremse weiterbildet.

Diese Aufgabe wird mit einem Verfahren zum Verzögern eines Fahrzeugs mit den Merkmalen des Patentanspruchs 1 gelöst sowie einer damit betriebenen Bremsanlage, welche die Merkmale des Patentanspruchs 10 bzw. des Patentanspruchs 11 aufweist.

Das erfindungsgemäße Verfahren dient der Erweiterung der bisherigen Funktionen herkömmlicher Bremsenlagen. In bestimmten Notsituationen ist es erforderlich, ein Fahrzeug sicher zum Stehen zu bringen.

Besonders geeignet sind deswegen Verfahren, die automatisch eine kontinuierliche Verzögerung bis hin zum Anhalten des Fahrzeugs ermöglichen.

In einer bevorzugten Ausführungsform der Erfindung wird ein Verfahren vorgesehen, das ein sich aus dem Stand bewegendes Fahrzeug in Abhängigkeit von einem Betrag zumindest einer Kenngröße des Fahrzeugs und einer ersten Einstellung eines Bedienelements - beispielsweise eines kurzzeitig gedrückten Tasters - automatisch verzögert. Wenn der Betrag der Kenngröße des Fahrzeugs innerhalb eines Intervalls zwischen einem unteren Randwert von größer als Null und einem oberen Randwert enthalten ist, wird die Verzögerung eingeleitet. Solange keine Unterbrechung durch eine weitere Einstellung des Bedienelements erfolgt, wird die Verzögerung aufrechterhalten.

Dies ist besonders in solchen Situationen sinnvoll, wenn auf Grund einer Unachtsamkeit oder eines Fahrers das Fahrzeug ohne betätigte Feststellbremse verlassen wird. Schon bei geringen Neigungen einer Fahrbahn bzw. des Untergrundes, auf dem das Fahrzeug stehen gelassen wird, kann es vorkommen, dass das Fahrzeug selbständig in Bewegung gerät und unkontrolliert wegrollt. So können Personen- und Sachschaden auftreten.

Typisch für ähnliche Notsituationen sind auch Irrtümer, die Fahrern unterlaufen, wenn sie glauben, dass es für einen sicheren Halt des Fahrzeugs ausreichen würde, wenn sie dazu lediglich den Antrieb bei eingekoppeltem Getriebe in der Hoffnung abstellen würden, die Bremsen des Fahrzeugs dadurch zu schonen. Es kommt nicht selten vor, dass das Fahrzeug dabei dennoch wegrollt - bei hoher Übersetzung des eingelegten Gangs - oder sogar der Gang "herausspringt". Ähnlich verhält es sich bei Fahrzeugen mit einem Automatikgetriebe, das in einer N-Stellung, d.h. neutraler Stellung, angehalten oder abgestellt wird.

Es passiert auch oft, dass es beim Anfahren auf geneigter Fahrbahn zu einem Fehlschalten des Fahrers kommt, wobei der Antrieb aussetzt und das Fahrzeug zu rollen beginnt. Auch ein festes Drücken auf die Betriebsbremse reicht oft nicht mehr aus, das Fahrzeug kontrolliert zum Stehen zu bringen, da die Betriebsbremse heutzutage hydraulisch angesteuert wird und der hydraulische Druck ohne zugeschalteten Antrieb des Fahrzeugs nicht aufgebaut wird.

Besonders vorteilhaft ist es, bei dem Verfahren gemäß der Erfindung Kenngrößen des Fahrzeugs zur Auswertung eines Fahrzustandes zu verarbeiten. Zweckdienlich ist es hier, Kenngrößen, beispielsweise die Geschwindigkeit oder Beschleunigung eines Fahrzeugs oder aber die Drehzahl, und das Drehmoment des Antriebs, usw. zu verwenden. Auch jede weitere Kenngröße ist nützlich, die aus einer Mehrzahl von Eingangswerten des Fahrzeugs abgeleitet werden kann.

In einer bevorzugten Ausführungsform wird die Mehrzahl von Eingangswerten zur Ermittlung der abgeleiteten Kenngröße zeitlich und logisch abgestimmt. Auf diese Weise werden solche Informationen vermieden, die zu Fehlern beim erfindungsgemäßen Verfahren führen könnten. Auf Grund der immer weiterreichenden Vernetzung der Systeme im Fahrzeug ist es möglich, diese Funktion in ein beliebiges Fahrzeugsystem zu integrieren und die möglichen Eingangswerte über die Vernetzung der Systeme auszutauschen. Eine solche Vernetzung kann es notwendig machen, auf die benötigten Eingangswerte warten zu müssen - z.B. in einem wake-up Fall. Dabei behält eine Funktion ihren Zustand bei, bis alle benötigten Eingangswerte zur Verfügung stehen und die Funktion regulär ablaufen kann.

Als nützlicher Eingangswert erweist sich die Stellung des Gaspedals. Auch das Gesamtgewicht des Fahrzeugs oder die Belegung der Sitze und/oder des Kofferraums eignen sich für die Steuerung des erfindungsgemäßen Verfahrens.

Um eine ungewollte Reaktion des Fahrzeugs zu vermeiden, die auf eine unbeabsichtigte Betätigung oder Einstellung des Bedienelements zurückzuführen wäre, sieht das Verfahren in einer besonderen Ausführungsform die Beendigung der automatischen Verzögerung vor, wenn die Kenngröße des Fahrzeugs einen Betrag aufweist, der größer ist als der Betrag des oberen Randwerts des vorgegebenen Intervalls. Beispielsweise wird dadurch verhindert, dass eine durch einen Mitfahrer während der Fahrt fälschlich ausgelöste Verzögerung abgebrochen wird.

Sofern eine Verzögerung während der Fahrt beabsichtigt ist - beispielsweise im Falle einer Notbremsung bei Ausfall der Betriebsbremse - ist in einer bevorzugten Ausführungsform der Erfindung die Möglichkeit vorgesehen, die Verzögerung des Fahrzeugs trotzdem einzuleiten und aufrechtzuerhalten, indem die erste Einstellung des Bedienelements aufrechterhalten wird - beispielsweise durch dauerhaftes Drücken des Tasters, wenn der Betrag der Kenngröße des Fahrzeugs größer als der obere Randwert des vorgegebenen Intervalls ist. Das Verfahren erlaubt somit die Nutzung des Verzögerungsverfahrens auch zur Steuerung eines redundanten Betriebs-Bremssystems.

Auf einfache Weise kann in einer bevorzugten Ausführungsform der Erfindung die erste Einstellung des Bedienelements oder die Verzögerung des Fahrzeugs bei einer zweiten Einstellung des Bedienelements beendet werden, also die Einstellung aufgehoben werden.

In einer besonders bevorzugten Ausführungsform ist es vorteilhaft, sich die Stellung des Gaspedals zu Nutze zu machen, um eine Aufhebung der ersten Einstellung des Bedienelements zu bewirken. Dabei ist davon auszugehen, dass der Fahrer nicht beabsichtigt zu verzögern, wenn er Gas gibt. Dies eignet sich insbesondere für das Anfahren auf ansteigender Fahrbahn. In jedem Fall wird beim Gas geben die Verzögerung bzw. die Bremse automatisch gelöst, sobald genügend Motorleistung zur Verfügung steht, um ein Zurückrollen des Fahrzeugs zu verhindern. Wenn der Betrag einer Kenngröße, welche die Stellung des Gaspedals beschreibt, einen größeren Wert annimmt als ein vorbestimmter Schwellwert oder vorausgegangener Betrag der Gaspedal-Kenngröße, wird die erste Einstellung des Bedienelements aufgehoben, d.h., das Fahrzeug wird beschleunigt.

Um das Fahrzeug sicher abzustellen, ist es notwendig, beim Stillstand des Fahrzeugs eine Feststellbremsanlage zu aktivieren. So kann gewährleistet werden, dass das Fahrzeug nicht unbeabsichtigt wegrollt.

Besonders vorteilhaft ist es, das Bedienelement in Form von Tastern zu gestalten. Taster können beliebig angeordnet werden, sind platzsparend, billig und einfach zu bedienen.

In einer weiteren Ausführungsform kann alternativ zu zwei Tastern eine Wipptaste verwendet werden, um zwei unterschiedliche Einstellungen des Bedienelements zu betätigen. Die Verwendung einer Wipptaste, welche die Funktion zweier einzelner Taster übernehmen kann, ist platzsparend.

Um eine Notsituation noch rechtzeitig in den Griff zu bekommen, wäre es notwendig, schnell an die Feststellbremse bzw. Parkbremse zu gelangen und diese zu betätigen bzw. zu ziehen. Allerdings erfordert es Kraft und Geschick, eine herkömmliche mechanische Feststellbremse in einer solchen Situation zu betätigen. Deshalb sind solche Taster dazu besser geeignet, die eine automatische Verzögerung - durch Fremdkraftwirkung - auslösen. Die Fremdkraftwirkung kann mittels elektrischer Aktuatoren erfolgen.

In einer besonders bevorzugten Ausführungsform werden die erfindungsgemäßen Bedienelemente bzw. Taster im Dachhimmel eines Fahrzeugs in der Nähe eines Fensters angeordnet und/oder in eine Karosseriesäule des Fahrzeugs integriert. Dies erleichtert die Bedienung der erfindungsgemäßen Bremsanlage in Notfallsituationen erheblich, wenn ein Fahrzeugfenster offen steht oder die Situation ein schnelles Öffnen einer Fahrzeugtür zulässt.

In einer besonders vorteilhaften Ausführungsform wird eine elektrische Feststellbremse bzw. Parkbremse zur Durchführung des Verzögerungsverfahrens gemäß der Erfindung verwendet. Sie eignet sich insbesondere deswegen, da sie in den meisten Fahrzeugen bereits integriert ist und auf Grund der Dimensionierung ihrer Bremskraft den Erfordernissen des erfindungsgemäßen Verzögerungsverfahrens genügt.

Auf Grund der oben genannten Vorteile des erfindungsgemäßen Verfahrens - insbesondere der Vermeidung von Unfällen - ist es zweckmäßig, Fahrzeuge mit einer solchen Bremsanlage zu versehen.

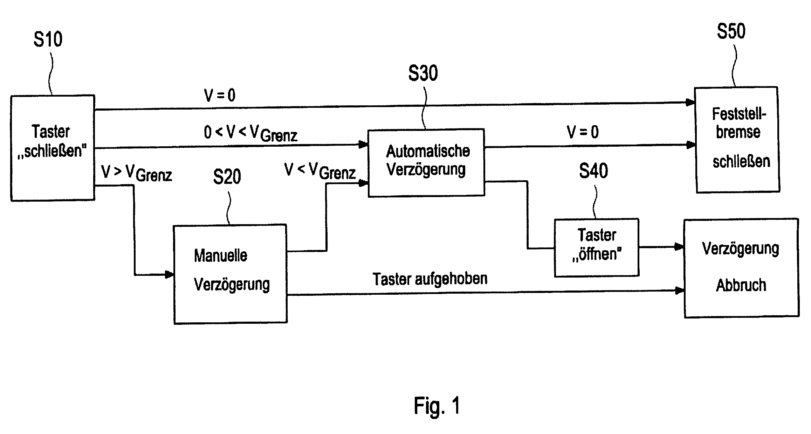

Im Folgenden wird die Erfindung und ihre Ausführungsformen anhand einer Zeichnung näher erläutert, in der
- Figur 1: ein Ablaufdiagramm zur Erläuterung einer Ausführungsform eines erfindungsgemäßen Verfahrens zeigt.

Figur 1 zeigt beispielhaft die Wirkungsweise des erfindungsgemäßen Verfahrens unter Berücksichtigung der Geschwindigkeit v als repräsentativer Kenngröße eines Fahrzeugs bei einer ersten Einstellung S10 eines Bedienelements - hier eines Tasters.

Bei einer Bremsanlage eines Fahrzeugs welches das erfindungsgemäße Verfahren zur Verzögerung anwendet, wird das Fahrzeug bei einer ersten Einstellung S10 eines Bedienelements - ein Taster in geschlossener Stellung - in Abhängigkeit der vorliegenden Geschwindigkeit verzögert, wie folgt:
Im Falle, dass die Geschwindigkeit v den Wert v gleich Null annimmt, wird von dem erfindungsgemäßen Verfahren automatisch die Feststellbremse S50 betätigt und das Fahrzeug dadurch am Wegrollen gehindert. Ein Fahrzeug kann dadurch auf geneigter Fahrbahn sicher zum Stehen gebracht werden.

In dem Fall, dass sich der Betrag der Geschwindigkeit v eines sich aus dem Stand bewegenden Fahrzeugs innerhalb eines Intervalls, zwischen einem unteren Randwert von größer als Null und einem oberen Randwert v_{grenz} befindet, wird durch das erfindungsgemäße Verfahren automatisch eine kontinuierliche Verzögerung S30 des Fahrzeugs eingeleitet. Diese Funktion eignet sich insbesondere beim Anfahren bzw. Anhalten auf geneigter Fahrbahn, weil dadurch ein ungewolltes Wegrollen des Fahrzeugs vermieden werden kann. Des Weiteren kann diese Funktion des Verfahrens beim unbeabsichtigten Wegrollen eines im Leerlauf bzw. in neutraler Schaltstellung bei einem Automatikgetriebe befindlichen Fahrzeugs eingesetzt werden, um das Fahrzeug abzubremsen.

Sofern keine weitere Einstellung des Bedienelements erfolgt, bleibt die Verzögerung aufrechterhalten, bis die Geschwindigkeit v des Wagens den Wert v gleich Null erreicht. Anschließend wird die Feststellbremse S50 geschlossen. Sie wirkt beispielsweise als Parkbremse, wenn der Antrieb des Fahrzeugs abgeschaltet wird

Wenn die Geschwindigkeit v des Fahrzeugs einen größeren Betrag annimmt als den des oberen Randwertes v_{grenz} des Intervalls, dann bleibt die ursprüngliche erste Einstellung S10 des Bedienelements - geschlossener Taster - ohne Folge. Eine kontinuierliche Verzögerung des Fahrzeugs kann nun nur noch manuell durch andauerndes Betätigen des Einstellelements S20-dauerhaftes Drücken des Tasters - bewerkstelligt werden. Ein solcher Fall tritt dann ein, wenn beispielsweise der Antrieb "abgestorben" ist und eine Betriebsbremse nicht mehr richtig greift. Dann kann die erfindungsgemäße Bremsanlage als redundantes Bremssystem genutzt werden.

Sobald das andauernde Betätigen des Einstellelements S20 unterbrochen wird - der gedrückte Taster also losgelassen wird - wird in Abhängigkeit der vorliegenden Geschwindigkeit v die Verzögerung dann automatisch fortgesetzt S30, wenn sich der Betrag der Geschwindigkeit v innerhalb eines Intervalls zwischen einem unteren Randwert von größer als Null und einem oberen Randwert v_{grenz} befindet. Die automatische Verzögerung S30 setzt in diesem Fall ein und kann nur noch mittels einer zweiten Einstellung S40 des Bedienelements aufgehoben werden. Die zweite Einstellung S40 des Bedienelements ermöglicht es dem Fahrer auch weiter zu fahren, wenn die Verzögerung des Fahrzeugs unbeabsichtigt ausgelöst wurde.

Wenn der Betrag der Geschwindigkeit v trotz vorausgehender Verzögerung immer noch größer ist als der obere Randwert v_{grenz} des Geschwindigkeitsintervalls, dann bleibt die erste Einstellung S10 des Bedienelements - Taster geschlossen - unbeachtlich bzw. wird aufgehoben. Das Fahrzeug wird nicht weiter verzögert. Dieser Fall trifft auf Situationen zu, bei denen das Bedienelement unbeabsichtigt in die erste Einstellung S10 gebracht wird - etwa der Taster bei voller Fahrt geschlossen wird.

Alternativ lässt sich die erste Einstellung S10 des Bedienelements - geschlossener Taster - auch mittels einer Stellung des Gaspedals aufheben und zwar dann, wenn der Betrag einer Kenngröße, welche die Stellung des Gaspedals beschreibt, einen größeren Wert annimmt als ein vorbestimmter Schwellwert oder vorausgegangener Betrag der Gaspedal-Kenngröße; d.h., das Fahrzeug wird beschleunigt (nicht gezeigt).

## Patentansprüche

1. Verfahren zum Verzögern eines sich aus dem Stand bewegenden Fahrzeugs in Abhängigkeit von
zumindest einer Kenngröße des Fahrzeugs
und einer ersten Einstellung (S10) eines Bedienelements zum Auslösen einer Verzögerung des Fahrzeugs, wobei
automatisch
eine kontinuierliche Verzögerung (S30) des Fahrzeugs eingeleitet und/oder aufrechterhalten wird,
**dadurch gekennzeichnet, dass**
die Verzögerung eingeleitet und/oder aufrechterhalten wird, wenn
a) ein Betrag der zumindest einen Kenngröße des Fahrzeugs innerhalb eines Intervalls zwischen einem unteren Randwert größer als Null und einem oberen Randwert (v_{grenz}) enthalten ist; und
die Verzögerung eingeleitet wird, wenn
b) das Bedienelement durch Betätigung in seine erste Einstellung gebracht wurde;
wobei eine Dauer der eingeleiteten Verzögerung unabhängig ist von einer Dauer des Verharrens des Bedienelements in seiner ersten Einstellung.

2. Verfahren nach Anspruch 1,
**dadurch gekennzeichnet, dass**
die zumindest eine Kenngröße des Fahrzeugs eine Geschwindigkeit oder Beschleunigung oder eine aus einer Mehrzahl von Eingangswerten abgeleitete Kenngröße des Fahrzeugs ist.

3. Verfahren nach Anspruch 2,
**dadurch gekennzeichnet, dass**
die Mehrzahl von Eingangswerten zur Ermittlung der abgeleiteten Kenngröße zeitlich und logisch aufeinander abgestimmt werden.

4. Verfahren nach Anspruch 1 bis 3,
**dadurch gekennzeichnet, dass**
eine weitere Kenngröße des Fahrzeugs einer Gaspedalstellung des Fahrzeugs entspricht.

5. Verfahren nach einem der Ansprüche 1 bis 4,
**dadurch gekennzeichnet, dass**
wenn die Kenngröße des Fahrzeugs einen Betrag aufweist,
der größer ist als der Betrag des oberen Randwerts (v_{grenz})des Intervalls,
die Verzögerung des Fahrzeugs beendet wird.

6. Verfahren nach einem der Ansprüche 1 bis 5,
**dadurch gekennzeichnet, dass**
wenn die Kenngröße des Fahrzeugs einen Betrag aufweist,
der größer ist als der Betrag des oberen Randwerts (v_{grenz}) des Intervalls,
die Verzögerung des Fahrzeugs solange aufrechterhalten bleibt, solange die erste Einstellung (S20) des Bedienelements aufrechterhalten bleibt.

7. Verfahren nach einem der Ansprüche 1 bis 6,
**dadurch gekennzeichnet, dass**
bei einer zweiten Einstellung (S40) des Bedienelements die Verzögerung des Fahrzeugs beendet wird.

8. Verfahren nach einem der Ansprüche 1 bis 6,
**dadurch gekennzeichnet, dass**
wenn die weitere Kenngröße des Fahrzeugs die einer Gaspedalstellung des Fahrzeugs entspricht, einen vorbestimmten Schwellwert überschreitet, die Verzögerung des Fahrzeugs beendet wird.

9. Verfahren nach einem der Ansprüche 1 bis 6,
**dadurch gekennzeichnet, dass**
bei einer Verzögerung bis zum Stillstand des Fahrzeugs eine Feststellbremsanlage (S50) aktiviert wird.

10. Bremsanlage zur Durchführung eines Verfahrens nach einem der Ansprüche 1 bis 9,
**dadurch gekennzeichnet, dass**
das Bedienelement zwei einzelne Taster umfasst.

11. Bremsanlage zur Durchführung eines Verfahrens nach einem der Ansprüche 1 bis 9,
**dadurch gekennzeichnet, dass**
das Bedienelement eine Wipptaste umfasst.

12. Bremsanlage nach einem der Ansprüche 10 oder 11,
**dadurch gekennzeichnet, dass**
das Bedienelement in einem Dachhimmel und/oder einer Säule einer Fahrzeugkarosserie angeordnet ist.

13. Bremsanlage nach einem der Ansprüche 10 bis 12,
**dadurch gekennzeichnet, dass**
die Bremsanlage eine Feststellbremse ist.

14. Fahrzeug mit einer Bremsanlage nach einem der Ansprüche 10 bis 13.

## Claims

1. A method for decelerating a vehicle moving from a standing position as a function of at least one characteristic value of the vehicle and of a first setting (S10) of an operating element for triggering a deceleration of the vehicle, wherein a continuous deceleration (S30) of the vehicle is automatically initiated and/or maintained, **characterised in that** the deceleration is initiated and/or maintained if
a) an amount of the at least one characteristic value of the vehicle is included within an interval between a lower boundary value greater than zero and an upper boundary value (vₗᵢₘᵢₜ) ; and
the deceleration is initiated if
b) the operating element has been brought into its first setting by actuation;
wherein a duration of the initiated deceleration is independent of a duration of the dwelling of the operating element in its first setting.

2. The method as claimed in claim 1, **characterised in that** the at least one characteristic value of the vehicle is a speed or acceleration or a characteristic value of the vehicle that is derived from a plurality of input values.

3. The method as claimed in claim 2, **characterised in that** for determining the derived characteristic values, the plurality of input values is temporally and logically matched to each other.

4. The method as claimed in claims 1 to 3, **characterised in that** a further characteristic value of the vehicle corresponds to a position of the acceleration pedal of the vehicle.

5. The method as claimed in any one of claims 1 to 4, **characterised in that**, if the characteristic value of the vehicle has an amount that is greater than the amount of the upper boundary value (vₗᵢₘᵢₜ) of the interval, the deceleration of the vehicle is terminated.

6. The method as claimed in any one of claims 1 to 5, **characterised in that**, if the characteristic value of the vehicle has an amount that is greater than the amount of the upper boundary value (vₗᵢₘᵢₜ) of the interval, the deceleration of the vehicle is maintained for as long as the first setting (S20) of the operating element is maintained.

7. The method as claimed in any one of claims 1 to 6, **characterised in that** in a second setting (S40) of the operating element, the deceleration of the vehicle is terminated.

8. The method as claimed in any one of claims 1 to 6, **characterised in that**, if the further characteristic value of the vehicle, which corresponds to a position of the acceleration pedal of the vehicle, exceeds a predetermined threshold value, the deceleration of the vehicle is terminated.

9. The method as claimed in any one of claims 1 to 6, **characterised in that** in the case of a deceleration down to standstill of the vehicle, a parking brake system (S50) is activated.

10. A braking system for carrying out a method as claimed in any one of claims 1 to 9, **characterised in that** the operating element comprises two individual pushbutton switches.

11. The braking system for carrying out the method as claimed in any one of claims 1 to 9, **characterised in that** the operating element comprises a rocker switch.

12. The braking system as claimed in any one of claims 10 or 11, **characterised in that** the operating element is provided in a roof lining and/or in a column of a vehicle body.

13. The braking system as claimed in any one of claims 10 to 12, **characterised in that** the brake system is a parking brake.

14. A vehicle having a braking system as claimed in any one of claims 10 to 13.

## Revendications

1. Procédé de ralentissement d'un véhicule se déplaçant depuis l'arrêt en fonction d'au moins une grandeur caractéristique du véhicule et d'un premier réglage (S10) d'un élément de manoeuvre pour déclencher un ralentissement du véhicule, dans lequel, automatiquement, un ralentissement continu (S30) du véhicule est initié et/ou maintenu,
**caractérisé en ce que** :
le ralentissement est initié et/ou maintenu si
a) le niveau de la au moins une grandeur caractéristique du véhicule se situe dans un intervalle entre une première valeur marginale inférieure supérieure à zéro et une valeur marginale supérieure (vₗᵢₘᵢₜₑ) ; et
le ralentissement est initié si
b) l'élément de manoeuvre a été amené à son premier réglage par commande ;
dans lequel la durée du ralentissement initié est indépendante de la durée du maintien de l'élément de manoeuvre dans son premier réglage.

2. Procédé selon la revendication 1,
**caractérisé en ce que** :
la au moins une grandeur caractéristique du véhicule est la vitesse ou l'accélération ou une grandeur caractéristique déduite d'une pluralité de valeurs d'entrée.

3. Procédé selon la revendication 2,
**caractérisé en ce que** :
la pluralité de valeurs d'entrée sont accordées l'une à l'autre dans le temps et au plan logique pour déterminer la grandeur caractéristique déduite.

4. Procédé selon les revendications 1 à 3, **caractérisé en ce que** :
une autre grandeur caractéristique du véhicule correspond à une position de la pédale d'accélérateur du véhicule.

5. Procédé selon l'une quelconque des revendications 1 à 4,
**caractérisé en ce que**,
si la grandeur caractéristique du véhicule présente un niveau qui est supérieur au niveau de la valeur marginale supérieure (vₗᵢₘᵢₜₑ) de l'intervalle,
le ralentissement du véhicule est terminé.

6. Procédé selon l'une quelconque des revendications 1 à 5,
**caractérisé en ce que**,
si la grandeur caractéristique du véhicule atteint un niveau qui est supérieur au niveau de la valeur marginale supérieure (vₗᵢₘᵢₜₑ) de l'intervalle,
le ralentissement du véhicule reste maintenu aussi longtemps que le premier réglage (S20) de l'élément de manoeuvre reste maintenu.

7. Procédé selon l'une quelconque des revendications 1 à 6,
**caractérisé en ce que**,
lors d'un second réglage (S40) de l'élément de manoeuvre, le ralentissement du véhicule est terminé.

8. Procédé selon l'une quelconque des revendications 1 à 6,
**caractérisé en ce que**,
si l'autre grandeur caractéristique du véhicule qui correspond à une position de la pédale d'accélérateur du véhicule dépasse une valeur de seuil prédéterminée, le ralentissement du véhicule est terminé.

9. Procédé selon l'une quelconque des revendications 1 à 6,
**caractérisé en ce que**,
lors d'un ralentissement jusqu'à l'arrêt du véhicule, une installation de freinage de stationnement (S50) est activée.

10. Installation de freinage permettant de réaliser un procédé selon l'une quelconque des revendications 1 à 9,
**caractérisée en ce que** :
l'élément de manoeuvre comprend deux touches individuelles.

11. Installation de freinage permettant de réaliser un procédé selon l'une quelconque des revendications 1 à 9,
**caractérisée en ce que** :
l'élément de manoeuvre comprend un bouton poussoir.

12. Installation de freinage selon l'une quelconque des revendications 10 ou 11,
**caractérisée en ce que** :
l'élément de manoeuvre est aménagé dans un habillage du toit et/ou dans une colonne de la carrosserie du véhicule.

13. Installation de freinage selon l'une quelconque des revendications 10 à 12,
**caractérisée en ce que** :
l'installation de freinage est un frein de stationnement.

14. Véhicule équipé d'une installation de freinage selon l'une quelconque des revendications 10 à 13.
